Europäisches Patentamt

European Patent Office

Office européen des brevets

(11) Veröffentlichungsnummer: **0 308 818**

**A1**

# EUROPÄISCHE PATENTANMELDUNG

(21) Anmeldenummer: **88115140.1**

(22) Anmeldetag: **15.09.88**

(51) Int. Cl.4: **G11B 5/31 , H01F 41/14**

(30) Priorität: **24.09.87 DE 3732207**

(43) Veröffentlichungstag der Anmeldung:
**29.03.89 Patentblatt 89/13**

(84) Benannte Vertragsstaaten:
**DE FR GB IT NL**

(71) Anmelder: **Siemens Aktiengesellschaft Berlin und München**
**Wittelsbacherplatz 2**
**D-8000 München 2(DE)**

(72) Erfinder: **Pichler, Alfred, Ing. (grad.)**
**Bert-Brecht-Weg 4**
**D-8031 Maisach-Gernlinden(DE)**
Erfinder: **Hertrampf, Joachim**
**Werinherstrasse 69**
**D-8000 München 90(DE)**
Erfinder: **Pachonik, Horst, Dipl.-Phys.**
**Lindenring 135**
**D-8028 Taufkirchen(DE)**

(54) **Verfahren zum Herstellen von Anschlusskontakten für Dünnfilm-Magnetköpfen.**

(57) Beim Herstellen von zusammenhängenden Anschlußkontakten für Dünnfilm-Magnetköpfe wird ein fotolithografischer Prozeßablauf angestrebt, der es erlaubt, den hierfür notwendigen, technologischen Aufwand, unter Berücksichtigung meßtechnischer und mechanischer Gesichtspunkte, so klein wie möglich zu halten. Dazu wird eine unter einer Aluminiumoxid-Schutzschicht (14) vergrabene, elektrisch leitfähige Permalloyschicht (11) mittels einer metallischen Maske (12) so strukturiert, daß Leiterbahnen (23), die die Magnetköpfe (20), zwei Schreib-/Leseköpfe, auf einem Substratelement (2) während des fotolithografischen Prozeßablaufes temporär kurzschließen, an einem Ort der späteren Zertrennung, einer Trennungslinie (24), zusammengeführt werden. Durch den Kurzschluß wird das Aufbringen einer zusätzlichen, metallischen Trägerschicht als galvanische Unterlage für einen Goldfilm (223) überflüssig.

FIG 2

## Verfahren zum Herstellen von Anschlußkontakten für Dünnfilm-Magnetköpfe

Die Erfindung bezieht sich auf ein Verfahren gemäß dem Oberbegriff des Hauptanspruches.

Das Herstellen von Anschlußkontaktstellen, wie sie beispielsweise in der integrierten Schaltungstechnik verwendet werden, ist ein technologischer Prozeßschritt mit produktspezifischen sowie herstellungsbedingten Merkmalen. In der Dünnfilmkopftechnologie ist es beispielsweise üblich, auf einem Substrat mit einer Vielzahl von integrierten Magnetköpfen Anschlußkontakte aus Kupfer fotolithografisch zu erzeugen. Hierbei gilt es insbesondere die Anschlußkontakte so auszugestalten, daß einerseits die unter einer Aluminiumoxid-Schutzschicht vergrabenen Magnetköpfe auch nach deren großflächiger Integration auf dem Substrat getestet und andererseits die Anschlußkontakte kostengünstig hergestellt sowie problemlos gebondet werden können.

Es ist daher ein Verfahren für Dünnfilm-Magnetköpfe denkbar, bei dem am Ende des fotolithografischen Prozesses in eine ca. 50 $\mu$m dicke Schutzschicht aus Aluminiumoxyd mittels eines chemisch löslichen Platzhalters Kontaktfenster eingelassen werden. Nachdem das Kontaktfenster in der Schutzschicht freigelegt worden ist, wird die freigelegte Kontaktoberfläche vergoldet. Dazu wird eine Golddeckschicht ganzflächig auf das Substrat aufgebracht. Vor dem Bonden wird die Golddeckschicht in der Umgebung der freigelegten und vergoldeten Kontaktoberfläche wieder entfernt und anschließend eine Bondnadel mit Bonddraht in das Kontaktfenster einjustiert. Darin liegen auch die wesentlichen Nachteile des beschriebenen Verfahrens. So ist einerseits das ganzflächige Aufbringen der Goldauflage, obwohl nur punktuell benötigt, unwirtschaftlich und andererseits das Einjustieren des Bonddrahtes in zu kleine Kontaktfenster problematisch. Dies ist deshalb problematisch, weil beim Einjustieren häufig die Wandung der Kontaktfenster berührt wird und damit ein erhöhtes Ausfallrisiko der Dünnfilm-Magnetköpfe verbunden ist.

Der vorliegenden Erfindung liegt daher die Aufgabe zugrunde, ein Verfahren der eingangs genannten Art zu schaffen, bei dem sämtliche Kontaktstellen von Dünnfilm-Magnetköpfen auf einer ein Substrat ganzflächig bedeckenden, elektrisch leitfähigen Permalloyschicht so ausgestaltet werden, daß sowohl ein problemloses Anbringen eines Bonddrahtes mit einer Bondnadel an die Kontaktstellen möglich ist als auch die einzelnen Dünnfilm-Magnetköpfe auf dem Substrat gemessen werden können, bevor dieses durch Sägen in Substratelemente zerlegt wird.

Diese Aufgabe wird erfindungsgemäß in Verbindung mit einem Verfahren der eingangs genannten Art durch die kennzeichnenden Merkmale des Patentanspruches 1 gelöst. Diese Lösung zeichnet sich insbesondere dadurch aus, daß das Herstellen von Anschlußkontakten für Dünnfilm-Magnetköpfe auf einzelne Substratelemente einer Substratscheibe, vom zeitlichen Prozeßablauf her, vor einem letzten Strukturierungsprozeß für die Magnetköpfe einsetzt; also dann, wenn eine elektrisch leitfähige Permalloyschicht noch ganzflächig vorhanden und eine metallische Maske schon fertig strukturiert ist. Durch die Struktur der metallischen Maske sind auf dem einzelnen Substratelement, das jeweils zwei Schreib-/Leseköpfe aufweist, Kontaktfahnen und Leiterbahnen festgelegt, die zur Mitte bzw. zu einer Trennungslinie des Substratelementes hin gerichtet sind. Die Leiterbahnen und Kontaktfahnen bilden dabei auf der Permalloyschicht einen Kurzschluß. Dadurch kann an Kontaktstellen der Kontaktfahnen auf einer Kupferschicht, die in einer nichtleitfähigen Aluminiumoxid-Schutzschicht eingebettet ist und mit dieser eine bündige Läppoberfläche bildet, ein zum Bonden notwendiger Goldfilm galvanisch abgeschieden werden, ohne diesen zuvor mit einer die Oberfläche ganzflächig bedeckenden, metallischen Trägerschicht unterlegen zu müssen. Zum Messen der Magnetköpfe muß allerdings der unter der Schutzschicht vergrabene Kurzschluß wieder beseitigt werden. Dazu wird das Substrat bzw. die Substratscheibe an Trennungslinien angeritzt und somit eine teure mechanische Bearbeitung des Substrates umgangen. Dies ist insbesondere dann von Bedeutung, wenn die Messungen an den Magnetköpfen eine hohe Ausfallrate ergeben würden und es sich deshalb nicht lohnt, das Ausschußsubstrat vollständig aufzutrennen.

Die erfindungsgemäße Lösung hat damit den großen Vorteil, daß sich der technologische Aufwand für das großflächige Integrieren von Dünnfilm-Magnetköpfen auf einem Substrat wesentlich reduziert und der Goldverbrauch auf ein notwendiges Minimum beschränkt ist.

Weiterbildungen der Erfindung sind in Unteransprüchen gekennzeichnet. Ein Ausführungsbeispiel der Erfindung wird nachfolgend an der Zeichnung näher erläutert; dabei zeigt:

FIG 1 modellhaft eine in Substratelemente unterteilte strukturierte Substratscheibe,

FIG 2 in Draufsicht eine prinzipielle Struktur eines einzelnen Substratelementes mit je zwei kurzgeschlossenen Anschlußkontakten für einen Dünnfilm-Magnetkopf,

FIG 3 bis FIG 6 modellhaft das fotolithografische Herstellen von verstärkten Anschlußkontakten auf einem mit einer Permalloyschicht versehenen Substrat.

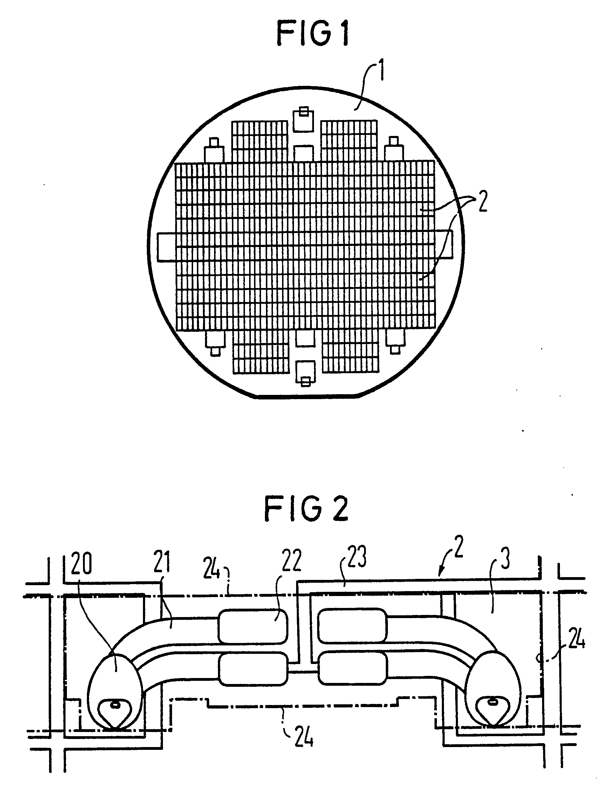

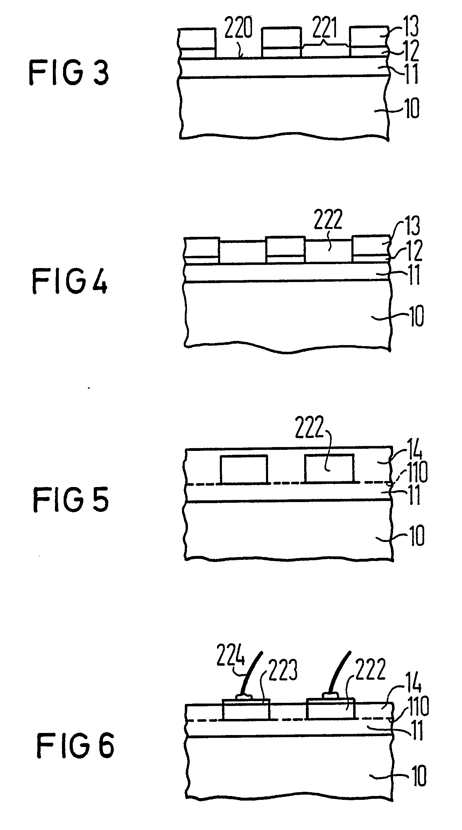

Ein Verfahren zum Herstellen von zusammenhängenden, unter einer Schutzschicht vergrabenen Anschlußkontakten für Dünnfilm-Magnetköpfe wird, wie in FIG 1 modellhaft dargestellt ist, auf einer Substratscheibe 1 bzw. einem Wafer ausgeführt. Das Beschichten bzw. Strukturieren des Wafers erfolgt dabei in einem fotolitho grafischen Prozeßablauf, wie er anhand eines Ausführungsbeispieles in der FIG 3 bis FIG 6 beschreiben wird. FIG 1 zeigt zudem die schematische Aufteilung der Scheibenoberfläche in einzelne Substratelemente 2.

In FIG 2 ist die prinzipielle Struktur eines Substratelementes 2 vergrößert dargestellt. Das Substratelement enthält zwei auf einer Integrationsfläche 3 angeordnete Magnetköpfe 20. An die symmetrisch zur vertikalen Achse des Substratelementes angeordneten Magnetköpfe ist jeweils ein Paar von Kontaktfahnen 21 angeschlossen. Diese verlaufen paarweise parallel und sind jeweils in Richtung auf die Mitte des Substratelementes ausgerichtet. Jede Kontaktfahne 21 weist an ihrem freien Ende eine Kontaktverstärkung 22 auf.

Die FIG 2 zeigt weiterhin Leiterbahnen 23, die die Kontaktfahnen bzw. die Magnetköpfe auf dem Substratelement kurzschließen. Ein Teil der Leiterbahnen verläuft dazu jenseits von Trennungslinien 24, längs denen das Substrat in die einzelnen Substratelemente zerlegt wird.

Ein Ausführungsbeispiel zum fotolithografischen Herstellen von verstärkten, zusammenhängenden Anschlußkontakten für Dünnfilm - Magnetköpfe auf einem Substrat 10 wird anhand der FIG 3 bis FIG 6 beschrieben. So ist in FIG 3 auf das Substrat ganzflächig eine elektrisch leitfähige Permalloyschicht 11 galvanisch aufgebracht. Mit einer für die Strukturierung der Permalloyschicht notwendigen, metallischen Maske 12 werden gleichzeitig die Leiterbahnen 23 festgelegt. Auf die Permalloyschicht bzw. die metallische Maske wird daran anschließend eine ca. 50 µm dicke Fotofolie 13 aufgetragen, die an Kontaktstellen 220 für die Kontaktverstärkungen 22 mittels eines Belichtungs- und Entwicklungsprozesses wieder ganz entfernt wird.

Ein die Permalloyschicht freilegendes Kontaktfenster 221 dient dem nachfolgenden, in FIG 4 dargestellten Prozeßschritt. Hierbei wird auf die freigelegte Permalloyschicht in dem Kontakt fenster eine Kupferschicht 222 galvanisch aufgebracht, deren Schichtdicke kleiner als die der Fotofolie ist. Im Anschluß daran werden die übrigen, auf der Permalloyschicht bzw. der metallischen Maske noch vorhandenen Reste der Fotofolie 13 entfernt und die freigelegte, maskierte Permalloyschicht durch Ionenstrahlätzen in eine strukturierte Permalloyschicht 110 überführt.

Die folgende Integrationsphase, das Aufbringen einer sowohl die strukturierte Permalloyschicht als auch die Kupferschicht ganzflächig bedeckenden Aluminiumoxid-Schutzschicht 14, ist in FIG 5 dargestellt. Der Übergang von FIG 5 nach FIG 6 ist dadurch gekennzeichnet, daß die aufgetragene Schutzschicht durch Läppen so weit abgetragen wird, bis sich eine bündige Oberfläche mit der Kupferschicht ergibt. Nachdem die Oberfläche gereinigt wurde, wird, wie FIG 6 zeigt, an den Kontaktstellen 220 auf der Kupferschicht ein Goldfilm 223 galvanisch aufgebracht, der für das spätere Bonden eines Bonddrahtes 224 benötigt wird.

In diesem Zustand ist der fotolithografische Prozeßablauf für das Substrat beendet. Erst jetzt wird das Substrat an den Trennungslinien 24 in FIG 2 angeritzt und somit der Kurzschluß zwischen den Kontaktfahnen 21 beseitigt, der für das galvanische Aufbringen des Goldfilms erforderlich war. Mit diesem Anritzen des Substrates ist nun die Voraussetzung dafür geschaffen, daß die integrierten Magnetköpfe auf dem Substrat vor der teuren, mechanischen Bearbeitung gemessen werden können.

Das beschriebene Verfahren besitzt fertigungstechnisch den Vorteil, daß durch das temporäre Kurzschließen von Leiterbahnen und Kontaktfahnen ein galvanischer Aufbau für die verstärkten Anschlußkontakte von Dünnfilm-Magnetköpfen möglich ist, der ohne eine zusätzliche, metallische Trägerschicht als galvanische Unterlage für den Goldfilm auskommt. Hierdurch gelingt es insbesondere auf sehr einfache Art und Weise, den technologischen Aufwand bei der großflächigen, fotolithografischen Herstellung von Anschlußkontakten für Magnetköpfe zu reduzieren.

## Ansprüche

1. Verfahren zum Herstellen von Anschlußkontakten für Dünnfilm-Magnetköpfe auf einem Substrat, das längs Trennungslinien in einzelne Substratelemente mit je zwei Schreib-/Leseköpfen unterteilt ist, bei dem die Substratoberfläche ganzflächig mit einer elektrisch leitfähigen Permalloyschicht bedeckt wird, die unter anderem eine Vielzahl von Kontaktstellen mit jeweils zum Magnetkopf hin gerichteten Kontaktfahnen aufweist und mittels einer metallischen Maske durch Ionenstrahlätzen strukturiert wird und bei dem die strukturierte Permalloyschicht, bis auf die Kontaktstellen, die für das Anbringen eines Bonddrahtes mit einem galvanisch aufgebrachten Goldfilm versehen sind, mit einer Schutzschicht aus Aluminiumoxid ganzflächig bedeckt wird,
**dadurch gekennzeichnet,**
daß mit dem Maskieren der elektrisch leitfähigen Permalloyschicht (11) des Substrates (10) gleichzeitig Leiterbahnen (23) festgelegt werden, die die Kontaktfahnen (21) kurzschließen, daß die maskierte Permalloyschicht (11) mit einer fotoresistiven Schicht (13) bedeckt wird und in diese fotoresistive Schicht (13) durch einen Belichtungs- und Entwicklungsprozeß an Kontaktstellen (220) Kontaktfenster (221) eingelassen werden, die die Permalloyschicht freilegen,

daß in den Kontaktfenstern (221) auf die freigelegte Permalloyschicht (11) eine Kupferschicht (222) galvanisch aufgebracht wird, deren Schichtdicke kleiner ist als die der fotoresistiven Schicht (13),

daß die Reste der fotoresistiven Schicht (13) von der elektrisch leitfähigen Permalloyschicht (11) wieder entfernt werden und daß diese danach strukturiert wird,

daß auf die so strukturierte Permalloyschicht (110) einschließlich der Kupferschicht (223) die Aluminiumoxid-Schutzschicht (14) zunächst ganzflächig aufgebracht und danach mechanisch wieder so weit abgetragen wird, bis die verbleibenden Reste der Schutzschicht mit der Kupferschicht eine bündige Oberfläche (15) bilden,

daß diese Oberfläche (15) gereinigt und auf ihr punktuell, an den Kontaktstellen (220) der Goldfilm (223) zum Befestigen der Bonddrähte (224) galvanisch abgeschieden wird, und

daß die Kurzschlüsse zwischen den Kontaktfahnen (21) zum Messen der Magnetköpfe noch vor dem Separieren der Substratelemente (2) durch Abtrennen der Leiterbahnen (23) aufgehoben werden.

2. Verfahren nach Anspruch 1, mit einem Substrat, bei dem die Leiterbahnen pro Substratelement mindestens einmal an einem Ort zusammengeführt sind, der von einer der Trennungslinien gekreuzt wird, **dadurch gekennzeichnet,** daß das Auftrennen der Leiterbahnen (23) durch mechanisches Anritzen des Substrates (10) längs der Trennungslinien (24) erfolgt.

# FIG 1

# FIG 2

**FIG 3**

220  221  13
12
11
10

**FIG 4**

222  13
12
11
10

**FIG 5**

222
14
110
11
10

**FIG 6**

224  223  222  14
110
11
10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 613 404 (M. TABEI) <br> * Ansprüche 1-9; Spalte 1, Zeilen 15-22 * <br> --- | 1,2 | G 11 B 5/31 <br> H 01 F 41/14 |
| A | DE-A-3 132 452 (SIEMENS AG) <br> * Ansprüche 1,6,10; Seiten 10-12 * <br> ----- | 1,2 | |

**RECHERCHIERTE SACHGEBIETE (Int. Cl.4)**

G 11 B
H 01 F

Der vorliegende Recherchenbericht wurde für alle Patentansprüche erstellt

| Recherchenort | Abschlußdatum der Recherche | Prüfer |
|---|---|---|
| DEN HAAG | 29-11-1988 | VITZTHUM N.A. |